# EUROPÄISCHE PATENTSCHRIFT

(11) **EP 1 714 816 B1**
(45) Veröffentlichungstag und Bekanntmachung des Hinweises auf die Patenterteilung: **09.04.2008**
(21) Anmeldenummer: 05103117.7
(22) Anmeldetag: 19.04.2005
(51) Int. Cl.: B60K 6/547

(54) **Schaltgetriebe**
Gearbox
Bôite de vitesses

(43) Veröffentlichungstag der Anmeldung: 25.10.2006
(73) Patentinhaber: Getrag Ford Transmissions GmbH, 50725 Köln (DE)
(72) Erfinder: Enström, Hans, 44331 Lerum (SE); Hegerath, Andreas, 50126 Bergheim (DE)

(56) Entgegenhaltungen:
- EP-A- 0 733 825
- EP-A- 1 077 336
- EP-A- 1 243 788
- EP-A- 1 245 863
- EP-A- 1 443 245
- EP-A- 1 531 286
- WO-A-20/05068876
- US-A- 5 799 536

## Beschreibung

Die Erfindung betrifft ein Schaltgetriebe insbesondere für Kraftfahrzeuge.

In der US 5,715,727 ist ein Schaltgetriebe offenbart, das eine Eingangswelle und zwei Ausgangswellen umfasst. Die Eingangswelle ist dabei über eine Kupplung mit einem Motor verbindbar. Die beiden Ausgangswellen stehen in Eingriff mit einem Abtrieb.

Des Weiteren weist das Schaltgetriebe der US 5,715,727 mehrere Zahnradpaare auf, um die erste Eingangswelle mit der einen Ausgangswelle bzw. mit der anderen Ausgangswelle zu verbinden. Ein Zahnradpaar weist dabei jeweils ein Festrad und ein Losrad auf. Jedem Zahnradpaar ist zudem eine Gangschaltkupplung zugeordnet, durch die das Losrad des Zahnradpaares mit der Welle, die das Losrad trägt, drehfest verbunden werden kann. Durch das drehfest verbundene Losrad wird zwischen der Eingangswelle und der betreffenden Ausgangswelle ein Drehmoment mit einem bestimmten Übersetzungsverhältnis übertragen, so dass durch ein Zahnradpaar jeweils ein Vorwärtsgang festgelegt wird.

Um einen Rückwärtsgang zu realisieren, weist das Schaltgetriebe eine Getriebeeinheit auf. Die Getriebeeinheit steht mit dem Zahnradpaar in Eingriff, durch das einen ersten Vorwärtsgang des Schaltgetriebes festgelegt wird. Die Getriebeeinheit sorgt dabei für die Drehmomentübertragung auf eine dritte Ausgangswelle, die wie die beiden anderen Ausgangswellen mit dem Abtrieb in Eingriff stehen.

Ist bei dem Schaltgetriebe der US 5,715,727 der Rückwärtsgang eingelegt, ist gleichzeitig die Gangschaltkupplung, die dem Zahnradpaar des ersten Ganges zugeordnet ist, geöffnet, so dass das Zahnradpaar des ersten Ganges das Drehmoment der Eingangswelle auf die dritte Ausgangswelle überträgt, ohne dabei ein Drehmoment auf die erste oder die zweite Ausgangswelle zu übertragen.

Entsprechend der Anzahl der Vorwärtsgänge ist auf der Eingangswelle eine Anzahl von Zahnrädern angeordnet, wobei die auf der Eingangswelle nebeneinander angeordneten Zahnräder wesentlich die axiale Baulänge des Schaltgetriebes beeinflussen. Insbesondere beim Einsatz in einem Kraftfahrzeug kann aufgrund des dort vorherrschenden knappen Platzangebotes die axiale Baulänge zu einer kritischen Größe werden. Der Erfindung liegt daher die Aufgabe zugrunde, ein Schaltgetriebe bereitzustellen, das eine vergleichsweise kleine axiale Baulänge aufweist, ohne dass die Anzahl der Vorwärtsgänge reduziert wird.

Die der Erfindung zugrunde liegende Aufgabe wird mit einem Schaltgetriebe mit den Merkmalen des Anspruches 1 gelöst. Bevorzugte Ausführungsbeispiele können den Unteransprüchen entnommen werden.

Dadurch, dass die Getriebeeinheit wenigstens ein Losrad mit zugeordneter Gangschaltkupplung umfasst und dass durch die Getriebeeinheit ein weiterer Vorwärtsgang realisierbar ist, kann die Anzahl der auf der Eingangswelle sitzenden Zahnräder für die verschiedenen Vorwärtsgänge reduziert werden. Dies eröffnet die Möglichkeit, die Eingangswelle kürzer auszuführen, wodurch im Allgemeinen die axiale Baulänge des Schaltgetriebes verkleinert werden kann.

Ist der zusätzliche Vorwärtsgang eingelegt, der durch die Getriebeeinheit eingelegt werden kann, dient das mit der Getriebeeinheit in Eingriff stehende Zahnradpaar, bestehend aus einem Losrad und einem Festrad, lediglich der Drehmomentübertragung von der Eingangswelle bis zur der Getriebeeinheit. Ist der zusätzliche Vorwärtsgang nicht eingelegt, kann das Zahnradpaar alternativ zur Drehmomentübertragung zwischen der Eingangswelle und der ersten bzw. zweiten Ausgangswelle verwendet werden. Dazu wird die dem Losrad des Zahnradpaars zugeordnete Gangschaltkupplung geschlossen, während gleichzeitig sichergestellt werden muss, dass die Gangschaltkupplung des zusätzlichen Vorwärtsgangs, vorzugsweise auf der dritten Ausgangswelle angeordnet, geöffnet ist.

Durch den Hilfsantrieb kann eine Drehung des Abtriebs in einer den Vorwärtsgängen entgegen gesetzten Drehrichtung realisiert werden kann. Somit kann aufgrund des Hilfsantriebes im Schaltgetriebe auf einen mechanischen Rückwärtsgang, bestehend aus wenigstens zusätzlichen Zahnradpaar, verzichtet werden.

In einem bevorzugten Ausführungsbeispiel steht der Hilfsantrieb mit der Eingangswelle in Wirkverbindung. Soll das mit dem Schaltgetriebe ausgestattete Kraftfahrzeug rückwärts fahren, wird das Drehmoment des Hilfsantriebes über die Eingangswelle, ein Zahnradpaar und über eine der Ausgangswellen auf den Abtrieb übertragen. Dies hat den Vorteil, dass die durch die einzelnen Zahnradpaare vorgegebene Übersetzungen auch beim Rückwärtsfahren des Kraftfahrzeuges genutzt werden können.

Darüber hinaus kann der Hilfsantrieb auch für andere Aufgaben eingesetzt werden. Beispielsweise kann er als Unterstützung für den Motor verwendet werden, wenn ein hohes Drehmoment benötigt wird (zum Beispiel soll das Kraftfahrzeug stark beschleunigt werden). Des Weiteren kann der Hilfsantrieb auch dazu eingesetzt werden, die Drehzahlen der Eingangswelle und einer der Ausgangswellen zu synchronisieren, um ein Einrücken einer Gangschaltkupplung zur drehfesten Verbindung eines Losrades mit einer entsprechenden Welle zu ermöglichen. Der Hilfsantrieb kann somit die konventionellen Synchronisationseinheiten ersetzen, lediglich deren sogenannte Dogging-Teile sind für eine formschlüssige Verbindung zwischen Welle und Losrad weiterhin notwendig. Der Hilfsantrieb kann dabei eine Welle in dem Schaltgetriebe bis zu einer Synchronisationsdrehzahl sowohl beschleunigen als auch abbremsen, so dass beim Hochschalten und Runterschalten eine entsprechende Gangschaltkupplung ohne Drehzahldifferenz eingreifen kann.

Darüber hinaus lässt sich der Hilfsantrieb auch dafür einsetzen, die Drehzahl der Eingangswelle mit der Drehzahl des Motors zu synchronisieren. Laufen Motor und Eingangswelle mit gleicher Drehzahl, lässt sich eine formschlüssige Kupplung mit kleiner Kraft einrücken, so dass im Vergleich zu den üblicherweise eingesetzten Reibkupplungen bzw. Rutschkupplungen die zum Einrücken der Kupplung notwendige Kraft deutlich reduziert werden kann. Des Weiteren vereinfacht sich der Aufbau der Kupplung, da durch die Synchronisation durch den Hilfsantrieb ein Schlupfbetrieb der Kupplung mit entsprechender Wärmeentwicklung ausgeschlossen werden kann. Zusammenfassend kann durch den Einsatz des Hilfsantriebs der Aufbau des Schaltgetriebes bzw. auch der dem Schaltgetriebe vorgeschalteten Kupplung vereinfacht werden, da auf die üblichen Mittel zur Drehzahlsynchronisation verzichtet werden kann.

In einem bevorzugten Ausführungsbeispiel ist eine zweite Eingangswelle vorgesehen, die koaxial zu der wenigstens einen Eingangswelle oder, mit anderen Worten, koaxial zu der ersten Eingangswelle angeordnet ist, wobei die zweite Eingangswelle durch eine zweite Kupplung mit dem Motor verbindbar ist. Das erfindungsgemäße Schaltgetriebe stellt somit ein Doppelkupplungsgetriebe dar, bei dem ein Schalten unter Last möglich ist. Das Doppelkupplungsgetriebe lässt sich dabei in ein erstes Teilgetriebe und in ein zweites Teilgetriebe aufteilen, denen jeweils eine Kupplung zugeordnet.

Während beispielsweise im Betrieb des Schaltgetriebes das erste Teilgetriebe über die erste Kupplung mit dem Motor verbunden ist und ein Drehmoment von dem Motor auf den Abtrieb überträgt, kann in dem zweiten Teilgetriebe, das durch die zweite geöffnete Kupplung von dem Motor getrennt ist, ein Gang eingelegt werden, so dass nach erfolgtem Gangeinlegen das Drehmoment des Motors auf das zweite Teilgetriebe übergeblendet werden kann, wobei, sofern es sich bei der ersten und der zweiten Kupplung um Rutschkupplungen handelt, in einem Übergangsbereich beide Kupplungen mit Schlupf Drehmoment übertragen.

Bei einem Doppelkupplungsgetriebe mit zwei Eingangswellen umfasst der Hilfsantrieb vorteilhafterweise zwei Antriebseinheiten, die jeweils mit einer Eingangswelle in Wirkverbindung stehen. Somit lassen sich die beiden Eingangswellen völlig unabhängig voneinander durch die jeweilige Antriebseinheit auf eine gewünschte Drehzahl beschleunigen bzw. abbremsen. Das Beschleunigen bzw. das Abbremsen einer Eingangswelle kann, wie oben bereits ausgeführt, der Synchronisation der Drehzahl der Eingangswelle mit der Drehzahl einer Ausgangswelle zwecks Einlegen eines Ganges oder zum anderen der Synchronisation der Drehzahl der Eingangswelle mit der Drehzahl des Motors dienen.

Vorzugsweise umfasst der Hilfsantrieb wenigstens eine Elektromaschine, die sowohl als Elektromotor als auch als Generator betrieben werden kann. Beispielsweise können beide Antriebseinheiten gleichzeitig als Elektromotor oder gleichzeitig als Generator eingesetzt werden. Auch ist es möglich, dass eine Antriebseinheit motorisch betrieben wird, während die andere Antriebseinheit als Generator zum Einsatz kommt. Somit lassen sich die Antriebseinheiten unabhängig voneinander steuern.

In einem bevorzugten Ausführungsbeispiel ist eine der Antriebseinheiten des Hilfsantriebes koaxial zu der Eingangswelle bzw. zu den Eingangswellen angeordnet. Um die axiale Baulänge des Schaltgetriebes möglichst klein zu halten, kann die zur Eingangswelle bzw. zu den Eingangswellen koaxial angeordnete Antriebseinheit in radialer Richtung die erste und/oder die zweite Kupplung umgreifen. Eine derartige Anordnung der Antriebseinheit hat keinen Einfluss auf die axiale Baulänge des Schaltgetriebes, wenn die axiale Breite der Antriebseinheit nicht über die axiale Breite der einen Kupplung oder, im Fall von zwei Kupplungen, nicht über die axiale Gesamtbreite der ersten der zweiten Kupplung hinausgeht.

Eine der Antriebseinheiten des Hilfsantriebes kann über eine Kette mit einer der Eingangswellen verbunden sein. Der Begriff "Kette" soll hier für alle möglichen geschlossenen Zugmittel (wie z. B. Keilriemen) stellvertretend stehen. Durch die getriebliche Verbindung durch eine Kette kann die Lage der Antriebseinheit relativ frei gewählt werden, was das konstruktive Einsetzen des Schaltgetriebes in ein Kraftfahrzeug mit knappem Platzangebot grundsätzlich erleichtert. Eine der Antriebseinheiten des Hilfsantriebes kann alternativ auch durch eine Stirnradstufe mit einer der Eingangswellen verbunden sein. Ein Zahnrad der Stirnradstufe kann ein Festrad einer der Eingangswellen oder ein mit einer der Eingangswellen in Wirkverbindung stehendes Losrad sein.

Vorzugsweise umfasst die Getriebeeinheit ein erstes Zahnrad, das mit einem Zahnrad des mit der Getriebeeinheit in Eingriff stehenden Zahnradpaares kämmt und um eine Achse rotiert, die von einer Achse der dritten Ausgangswelle verschieden ist. Das Zahnrad des mit der Getriebeeinheit in Eingriff stehenden Zahnradpaares ist dabei auf der ersten oder der zweiten Ausgangswelle angeordnet. Durch das erste Zahnrad mit dessen eigener Achse kann somit sichergestellt werden, dass sich die betreffende Ausgangswelle (die erste oder die zweite Ausgangswelle) und die dritte Ausgangswelle im gleichen Drehsinn dreht. Die Getriebeeinheit ermöglicht folglich einen zusätzlichen Vorwärtsgang.

Die Getriebeeinheit kann ein zweites Zahnrad umfassen, das auf der dritten Ausgangswelle angeordnet ist und mit dem ersten Zahnrad in Wirkverbindung steht. Zudem kann die Getriebeeinheit eine Zwischenwelle mit einem dritten Zahnrad umfassen, das mit dem zweiten Zahnrad kämmt. Das erste Zahnrad ist dabei zweckmäßigerweise ebenfalls auf der Zwischenwelle angeordnet. Durch unterschiedlich große Durchmesser des ersten Zahnrades und des dritten Zahnrades lässt sich das Verhältnis der Drehgeschwindigkeiten der betreffenden Ausgangswelle (der ersten oder der zweiten Ausgangswelle) und der dritten Ausgangswelle einstellen.

In einem bevorzugten Ausführungsbeispiel ist das zweite Zahnrad, das auf der dritten Ausgangswelle angeordnet ist, als Losrad ausgebildet. Dem Losrad ist eine Gangschaltkupplung zugeordnet, durch die das Losrad mit der dritten Ausgangswelle drehfest verbindbar ist. Bei einem drehfest verbundenen Losrad kann somit von der Eingangswelle über das Zahnradpaar, das mit dem ersten Zahnrad der Getriebeeinheit in Eingriff steht, ein Drehmoment auf die dritte Ausgangswelle übertragen werden, die wiederum das Drehmoment weiter auf den Abtrieb überträgt.

Vorzugsweise sind auf der wenigstens einen Eingangswelle oder den Eingangswellen jeweils die Festräder der jeweiligen Zahnradpaare angeordnet. Wie oben bereits erwähnt, kann die Länge der Eingangswelle bzw. die Länge der beiden Eingangswellen der bestimmende Faktor für die axiale Baulänge des Schaltgetriebes sein. Werden nur Festräder auf den Eingangswellen angeordnet, ist eine Anordnung von Gangschaltkupplungen auf der Eingangswelle, die zusätzlich axialen Bauraum benötigt, nicht notwendig.

Um weiter axialen Bauraum einzusparen, kann vorgesehen sein, dass ein Festrad eines ersten Zahnradpaares gleichzeitig das Festrad eines zweiten Zahnradpaares bildet. Somit würde sowohl das Losrad des ersten Zahnradpaares als auch das Losrad des zweiten Zahnradpaares mit dem Festrad kämen.

Vorzugsweise trägt jede Ausgangswelle drehfest jeweils ein kleines Zahnrad oder Ritzel, das mit einem großen Zahnrad oder Ringzahnrad ("ring gear") kämmt. Durch das Zusammenwirken eines Ritzels und des großen Zahnrads wird (jeweils) eine letzte Übersetzungsstufe des Schaltgetriebes festgelegt. Die Ritzel können in einer Ebene liegen und jeweils einen gleichen Durchmesser aufweisen.

Vorzugsweise liegen die erste und zweite Ausgangswelle in einer Ebene, von der die erste Eingangswelle beabstandet sind. Dieses Merkmal kann auch beim Schaltgetriebe mit zwei koaxialen Eingangswellen sinngemäß verwirklicht sein.

Die Wellen können in einem Getriebegehäuse untergebracht sein, das für eine Drehlagerung der einzelnen Wellen sorgt. Auch kann ein Zahnrad zum Übertragen von Drehmoment in einer zu den Vorwärtsgängen entgegen gesetzten Drehrichtung vorgesehen sein, das zweckmäßig auf der dritten Ausgangswelle angeordnet ist (Zahnrad für den Rückwärtsgang). Das Zahnrad kann als Losrad ausgebildet sein, so dass eine Drehmomentübertragung auf die dritte Ausgangswelle nur dann erfolgt ist, wenn eine dem Losrad zugeordnete Gangschaltkupplung geschlossen ist. Somit wäre ein schaltbarer, mechanischer Rückwärtsgang gegeben. Beispielsweise ließe sich damit ein Schaltgetriebe mit sieben Vorwärtsgängen realisieren, bei dem zwei Losräder auf der ersten Ausgangswelle, vier Losräder auf der zweiten Ausgangswelle und zwei Losräder für einen Vorwärtsgang und für den Rückwärtsgang auf der dritten Ausgleichswelle angeordnet sind. Dieses 7-Gang-Schaltgetriebe kann als Doppelkupplungsgetriebe ausgebildet sein, bei dem die Gänge I, III, V, VII einem ersten Teilgetriebe und die Gänge II, IV, VI und der Rückwärtsgang R einem zweiten Teilgetriebe zugeordnet sein können.

Das Zahnrad für den Rückwärtsgang kann mit einem Doppel-Losrad Eingriff stehen, das ein erstes Zahnradteil und ein zweites Zahnradteil umfasst, wobei das erste Zahnradteil mit dem Zahnrad für den Rückwärtsgang kämmt und das zweite Zahnradteil als Losrad für einen Vorwärtsgang, vorzugsweise für den zweiten Vorwärtsgang eingesetzt wird. Ein Durchmesser des ersten Zahnradteils kann dabei kleiner sein als ein Durchmesser des zweiten Zahnradteils.

Alternativ oder zusätzlich kann ein (weiteres) Doppel-Losrad dazu verwendet werden, das Drehmoment des Motors auf die dritte Ausgangswelle zu übertragen, wobei ein Zahnradteil des Doppel-Losrads der erfindungsgemäßen Getriebeeinheit für den weiteren Vorwärtsgang zugeordnet ist und der andere Zahnradteil einem Vorwärtsgang dient, bei dem Drehmoment von der ersten oder zweiten Ausgangswelle auf den Abtrieb übertragen wird.

Anhand des in den Figuren dargestellten Ausführungsbeispieles wird die Erfindung näher erläutert. Es zeigen:
- Figur 1: eine schematische Darstellung eines erfindungsgemäßen Schaltgetriebes von der Seite;
- Figur 2: schematisch das Schaltgetriebe der Figur 1 im Querschnitt; und
- Figur 3: eine schematische Darstellung eines zweiten Ausführungsbeispiel der Erfindung; und
- Figur 4: eine schematische Darstellung eines dritten Ausführungsbeispiels der Erfindung.

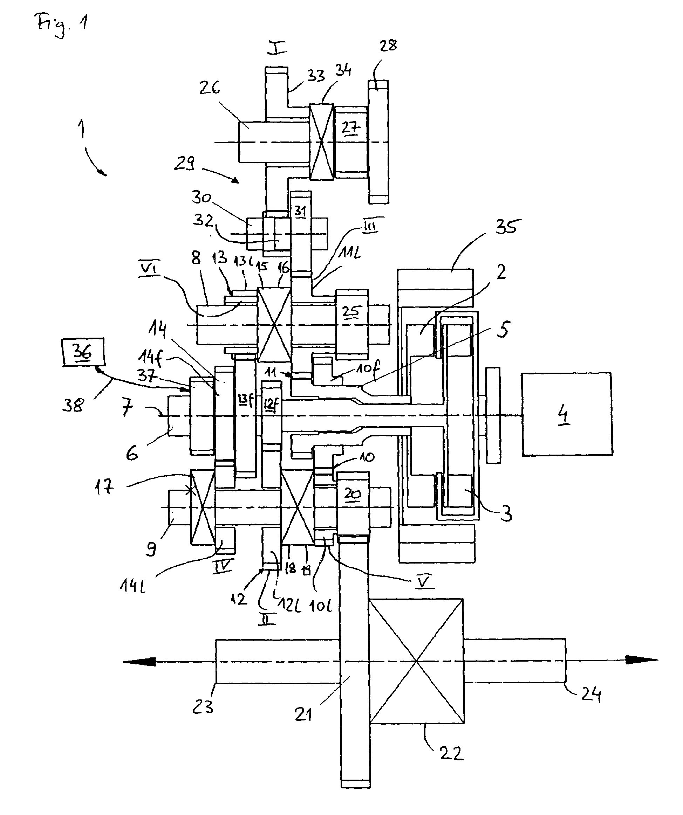

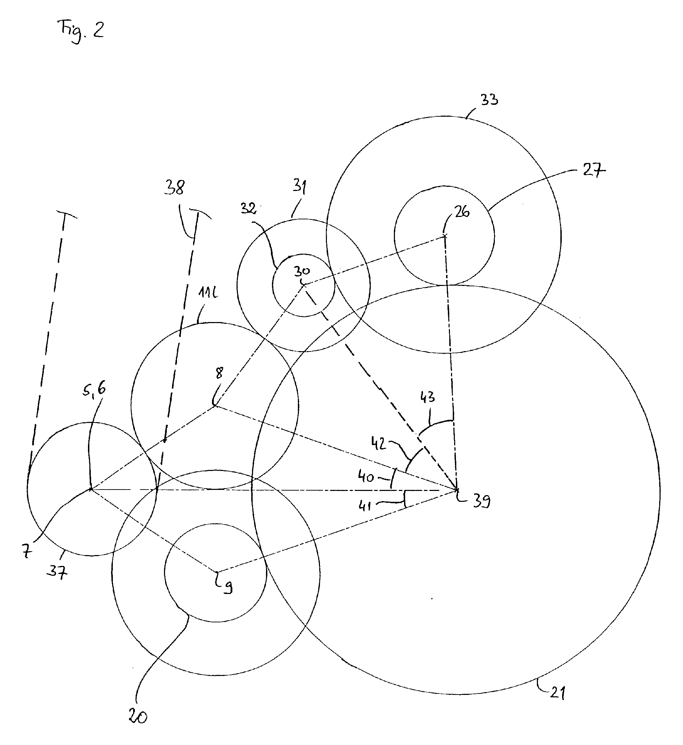

Die Figuren 1 und 2 zeigen ein Schaltgetriebe, das in seiner Gesamtheit mit 1 bezeichnet wird. Das Schaltgetriebe 1 ist als Doppelkupplungsgetriebe mit einer ersten Kupplung 2 und mit einer zweiten Kupplung 3 ausgebildet. Die erste Kupplung 2 verbindet in einem geschlossenen Zustand einen Verbrennungsmotor 4 mit einer ersten Eingangswelle 5. Die zweite Kupplung 3 dient dazu, den Verbrennungsmotor 4 mit einer zweiten Eingangswelle 6 zu verbinden. Die beiden Kupplungen 2, 3 sowie die beiden Eingangswellen 5, 6 sind koaxial angeordnet und weisen eine gleiche Achse auf, die mit 7 bezeichnet ist.

Das Schaltgetriebe 1 weist des Weiteren eine erste Ausgangswelle 8 und eine zweite Ausgangswelle 9 auf. Die jeweiligen Drehachsen der beiden Ausgangswellen 8, 9 sind zur Achse 7 parallel, jedoch von ihr beabstandet. Zur Verbindung der beiden Eingangswellen 5, 6 mit den beiden Ausgangswellen 8, 9 sind fünf Zahnradpaare 10, 11, 12, 13, 14 vorgesehen. Jedes Zahnradpaar umfasst dabei jeweils ein Festrad und ein Losrad, wobei das Festrad mit dem Index f und das Losrad mit dem Index I bezeichnet wird. Beispielsweise ist drehfest an der ersten Eingangswelle 5 ein Festrad 10f des Zahnradpaares 10 angeordnet, das mit einem Losrad 10l kämmt, das auf der zweiten Ausgangswelle 9 sitzt. Wie in Figur 1 zu erkennen ist, sind auf den Eingangswellen 5, 6 nur die Festräder 10f, 11 f, 12f, 13f, 14f der Zahnradpaare 10 bis 14 angeordnet.

Auf den Ausgangswellen 8, 9 sind mehrere Gangschaltkupplungen 15, 16, 17, 18, 19 angeordnet. Die Gangschaltkupplungen 15 bis 19 sind in der Figur 1 stark schematisiert durch ein Rechteck mit eingezeichneten Diagonalen dargestellt, wobei teilweise zwei benachbarte Gangschaltkupplungen lediglich durch ein Rechteck wieder gegeben werden. Beispielsweise dient die Gangschaltkupplung 19 dazu, das Losrad 10l drehfest mit der zweiten Ausgangswelle 9 zu verbinden. Ist eine derartige drehfeste Verbindung zwischen Losrad 10l und Ausgangswelle 9 hergestellt, lässt sich durch das Zahnradpaar 10 ein Drehmoment von der ersten Eingangswelle 5 auf die zweite Ausgangswelle 9 übertragen. Ist die Gangschaltkupplung 19 geschlossen bzw. eingerückt, ist ein fünfter Vorwärtsgang des Schaltgetriebes 1 eingelegt. Die einzelnen Vorwärtsgänge II, III, IV, V, VI, die jeweils durch eines der Zahnradpaare 10, 11, 12, 13,14 festgelegt werden, werden durch römische Ziffern in der Figur 1 gekennzeichnet.

So wird der zweite Vorwärtsgang II durch das Zahnradpaar 12 gebildet, dessen Festrad 12f auf der zweiten Eingangswelle 6 und dessen Losrad 12l auf der zweiten Ausgangswelle 9 angeordnet ist. Der dritte Vorwärtsgang III wird durch das Zahnradpaar 11 gebildet, dessen Festrad 11f auf der ersten Eingangswelle 5 und dessen Losrad 11l auf der ersten Ausgangswelle 8 angeordnet ist. Der vierte Vorwärtsgang IV wird durch das Zahnradpaar 14 gebildet, dessen Festrad 14f auf der zweiten Eingangswelle 6 und dessen Losrad 14l auf der zweiten Ausgangswelle 9 angeordnet ist.

Bei eingelegtem fünften Gang V wird das Drehmoment von der zweiten Ausgangswelle 9 über ein drehfest mit der zweiten Ausgangswelle 9 verbundenes Zahnrad oder Ritzel 20 auf ein großes Zahnrad oder Ringzahnrad 21 übertragen. Von dem Ringzahnrad 21 wird das Drehmoment in ein Differential 22 geleitet, das in Figur 1 schematisiert als Rechteck mit eingezeichneten Diagonalen dargestellt ist. Das Differential 22 teilt das Drehmoment auf eine erste Achse 23 und eine zweite Achse 24 auf.

Neben dem Zahnrad 20 kämmt mit dem Ringzahnrad 21 ein Zahnrad 25, das drehfest mit der ersten Ausgangswelle 8 verbunden ist. Beispielsweise lässt sich somit ein Drehmoment von der zweiten Eingangswelle 6 auf das Ringzahnrad 21 übertragen, wenn die Gangschaltkupplung 15 geschlossen ist. Das Zahnradpaar 13 leitet dann mit einem dann drehfest mit der ersten Ausgangswelle 8 verbundenen Losrad 131 das Drehmoment von der zweiten Eingangswelle 6 auf die erste Ausgangswelle 8.

Neben der ersten Ausgangswelle 8 und der zweiten Ausgangswelle 9 umfasst das Schaltgetriebe 1 eine weitere Ausgangswelle, eine dritte Ausgangswelle 26. Auch diese dritte Ausgangswelle 26 weist ein drehfest angeordnetes Zahnrad 27 auf, das mit dem Ringzahnrad 21 in Eingriff steht. Darüber hinaus ist die dritte Ausgangswelle 26 mit einem Parkrad 28 drehfest verbunden, durch das über das Zahnrad 27 das Ringzahnrad 21 arretiert werden kann. Die Zahnräder 20, 25 und 27 weisen jeweils einen gleichen Durchmesser auf und liegen in einer gemeinsamen Ebene.

Eine Getriebeeinheit 29 dient dazu, eine Verbindung zwischen dem Losrad 11l und der dritten Ausgangswelle 26 herzustellen. Die Getriebeeinheit 29 umfasst dabei eine Zwischenwelle 30, auf der ein Zahnrad 31 drehfest angeordnet ist. Auf der Zwischenwelle 30 ist ein weiteres Zahnrad 32 angeordnet, das ebenfalls drehfest mit der Zwischenwelle 30 verbunden ist und mit einem Losrad 33 kämmt, das von der dritten Ausgangswelle 26 getragen wird. Eine dem Losrad 33 zugeordnete Gangschaltkupplung 34 dient dazu, in einem eingerückten oder geschlossenen Zustand eine drehfeste Verbindung zwischen Losrad 33 und der dritten Ausgangswelle 26 herzustellen.

Wie der römischen Zahl I an dem Zahnrad 33 zu entnehmen ist, wird durch die Gangschaltkupplung 34 der erste Vorwärtsgang des Schaltgetriebes 1 eingelegt.

Des Weiteren umfasst das Schaltgetriebe 1 eine erste Elektromaschine 35 und eine zweite Elektromaschine 36. Die erste Elektromaschine 35 ist dabei koaxial zu den Eingangswellen 5, 6 angeordnet und umgreift in radialer Richtung die beiden Kupplungen 2, 3. Die axialen Ausdehnungen der ersten Elektromaschine 35 entsprechen dabei in etwa den axialen Ausmaßen der Kupplungen 2, 3, so dass die Elektromaschine 35 keinen oder nur einen sehr kleinen Einfluss auf die axiale Baulänge des Schaltgetriebes 1 hat. Die Elektromaschine 35 ist mit der ersten Eingangswelle 5 verbunden.

Die Elektromaschine 36 ist über ein Zahnrad 37 und über ein geschlossenes Zugmittel in Form einer Kette 38 mit der zweiten Eingangswelle 6 verbunden (vgl. Figur 2). In Figur 1 ist die Kette 38 als Doppelpfeil schematisch dargestellt, der anzeigen soll, dass eine Verbindung zwischen der Elektromaschine 36 und der zweiten Welle 6 mit dem darauf angeordneten Zahnrad 37 besteht.

Die Elektromaschinen 35, 36 können bei dem Betrieb des Schaltgetriebes 1 verschiedenste Aufgaben erfüllen. Beispielsweise sind sie geeignet, die Drehzahl der jeweils mit ihr verbundenen Eingangswelle entweder mit der Drehzahl einer Ausgangswelle oder mit einer Drehzahl des Verbrennungsmotors zu synchronisieren. Diese Synchronisationen ermöglichen es, die Gangschaltkupplungen im Schaltgetriebe 1 und auch die erste Kupplung 2 und die zweite Kupplung 3 als formschlüssige Kupplungen ohne Schlupfbetrieb auszubilden.

Das Schaltgetriebe 1 sieht keinen mechanischen Rückwärtsgang vor. Ein Rückwärtsgang des Schaltgetriebes 1 wird dadurch realisiert, dass einer der beiden Elektromaschinen 35, 36 in einem Drehsinn rotiert, der der Drehung des Verbrennungsmotors 4 entgegen gerichtet ist. Beispielsweise kann das Drehmoment der ersten Elektromaschine 35 zum Rückwärtsfahren des Fahrzeuges verwendet werden, in dem das Schaltgetriebe 1 eingebaut ist.

Wie der Figur 1 zu entnehmen ist, sind die einzelnen Zahnradpaare 10, 11, 12, 13, 14, die Gangschaltkupplungen 15, 16, 17, 18, 19 sowie die Getriebeeinheit 29 auf einer Seite des Schaltgetriebes 1 angeordnet, wenn die Ebene, in der die Ritzel 20, 25, 27 und das Ringzahnrad 21 liegt, als eine das Schaltgetriebe in zwei Seiten aufteilende Bezugsebene gesehen wird. Auf der anderen Seite dieser Bezugsebene sind die Kupplungen 2, 3 sowie der Motor 4 angeordnet. Alternativ kann vorgesehen sein, dass zumindest Teile der Getriebeeinheit 29 auf der Seite der Kupplungen 2, 3 angeordnet sind. So kann sich die Zwischenwelle 30 von der Längsebene des Zahnrads 31 in Richtung der Kupplungen 2, 3 erstrecken, wobei das Losrad 33 und das Zahnrad 32 sich dann in der Darstellung der Figur 1 rechts von dem Ritzel 27 befindet.

Aus Figur 2 ist zu erkennen, wie die einzelnen Wellen 5, 6, 8, 9, 26, 30 im Bezug auf eine Drehachse 39 des Ringzahnrads 21 angeordnet sind. Ein Winkel 40, der von der Verbindungsgerade zwischen der Drehachse 7 und der Drehachse 39 und von der Verbindungsgerade zwischen der Drehachse der ersten Ausgangswelle 8 und Drehachse 39 aufgespannt wird, liegt beim dargestellten Ausführungsbeispiel zwischen 15 und 25 Grad und beträgt rund 20 Grad. Ein Winkel 41, der entsprechend die relative Lage der Eingangswellen 5, 6 zur zweiten Ausgangswelle 9 kennzeichnet, liegt zwischen ebenfalls zwischen 15 und 20 Grad und beträgt rund 20 Grad. Ein Winkel 42, der die relative Lage von der ersten Ausgangswelle 8 bezogen auf die Zwischenwelle 30 kennzeichnet, liegt zwischen 30 und 40 Grad und beträgt rund 35 Grad. Schließlich kann der Figur 2 ein weiterer Winkel 43 entnommen werden, der zwischen 30 und 40 Grad liegt und rund 35 Grad beträgt.

Anhand eines Gangwechsels von dem Rückwärtsgang zum ersten (Vorwärts-)Gang I und vom ersten Gang I auf den zweiten Gang II soll das Verfahren exemplarisch auch für Gangwechsel zwischen anderen Gängen beschrieben werden, wie das Schaltgetriebe 1 betrieben wird.

Steht das Fahrzeug, in das das Schaltgetriebe 1 eingebaut ist, still und befinden sich die erste Kupplung 2 und auch die zweite Kupplung 3 jeweils in einem geöffneten Zustand, stehen auch bei laufendem Motor 4 die beiden Eingangswellen 5, 6 still.

Um nun das Fahrzeug rückwärts zu bewegen, dreht sich die erste Elektromaschine 35 in Drehrichtung entgegengesetzt zur der vom Motor 4 vorgegebenen Drehrichtung. Dies bewirkt eine entsprechende Drehung der mit der Elektromaschine 35 verbundenen ersten Eingangswelle 5. Zumindest die Gangschaltkupplungen 16, 18 des Schaltgetriebes 1 befinden sich dabei in einem geöffneten Zustand. Die Gangschaltkupplung 34 befindet sich im geschlossenen Zustand und verbindet somit das Losrad 33 drehfest mit der dritten Ausgangswelle 26. Das Drehmoment, das von der ersten Elektromaschine 35 entwickelt wird, wird von der ersten Eingangswelle 5 über das Festrad 11f auf das Losrad 11l übertragen. Eine Drehmomentübertragung von dem Losrad 11l auf die erste Ausgangswelle 8 findet nicht statt, da die dem Losrad 11l zugeordnete Gangschaltkupplung 16 nicht geschlossen ist. Vielmehr wird das Drehmoment von dem Losrad 11l auf das Zahnrad 31 übertragen, von wo es über die Zwischenwelle 30 und das Zahnrad 32 auf das Losrad 33 weitergeleitet wird. Da das Losrad 33 aufgrund der geschlossenen Gangschaltkupplung 34 drehfest mit der dritten Ausgangswelle 26 verbunden ist, findet eine Drehmomentübertragung über das Zahnrad 27 auf das Ringzahnrad 21 und somit auf die erste und zweite Achswelle 23, 24 statt.

Um nun von der Rückwärtsfahrt in den ersten Gang zu gelangen, wird die erste Eingangswelle 5 durch die Elektromaschine 35 abgebremst. Danach wird die erste Kupplung 2, soweit sie als Rutschkupplung ausgebildet ist und eine Synchronisation der Drehzahl der Eingangswellen mit der Drehzahl des Motors 4 durch den Hilfsantrieb nicht vorgesehen ist, geschlossen, wobei der Verbrennungsmotor 4 nun die erste Eingangswelle 5 antreibt. Wie beim Rückwärtsgang (siehe oben) wird nun das Drehmoment von der ersten Eingangswelle 5 über das Zahnradpaar 11, über die Zwischenwelle 30 und über die dritte Ausgangswelle 26 auf das Ringzahnrad 21 übertragen, wobei jedoch nun sich die einzelnen Getriebeteile in eine andere Richtung drehen. Die Gangschaltkupplung 34 ist dabei weiterhin geschlossen, während alle übrigen Gangschaltkupplungen weiterhin geöffnet sind.

Um nun in den zweiten Gang zu schalten, wird die Gangschaltkupplung 18 geschlossen, so dass das Losrad 12l drehfest mit der zweiten Ausgangswelle 9 verbunden ist. Bei dem Schalten der Gangschaltkupplung 18 ist die zweite Kupplung 3, durch die die zweite Eingangswelle 6 mit dem Verbrennungsmotor 4 verbindbar ist, geöffnet. Zum Einrücken der Gangschaltkupplung 18 ist eine Synchronisation der Drehzahl der zweiten Eingangswelle 6 mit der Drehzahl der zweiten Ausgangswelle 9 notwendig. Diese Synchronisation kann von der zweiten Elektromaschine 36 übernommen werden. Ist nun der zweite Vorwärtsgang eingelegt, wird die erste Kupplung 2 geöffnet und gleichzeitig die zweite Kupplung 3 geschlossen. Somit übertragen die beiden Kupplungen 2, 3 in einer gewissen Überschneidungsphase im Schlupfbetrieb gleichzeitig ein Drehmoment. Dies ermöglicht ein Schalten ohne jegliche Drehmomentunterbrechung.

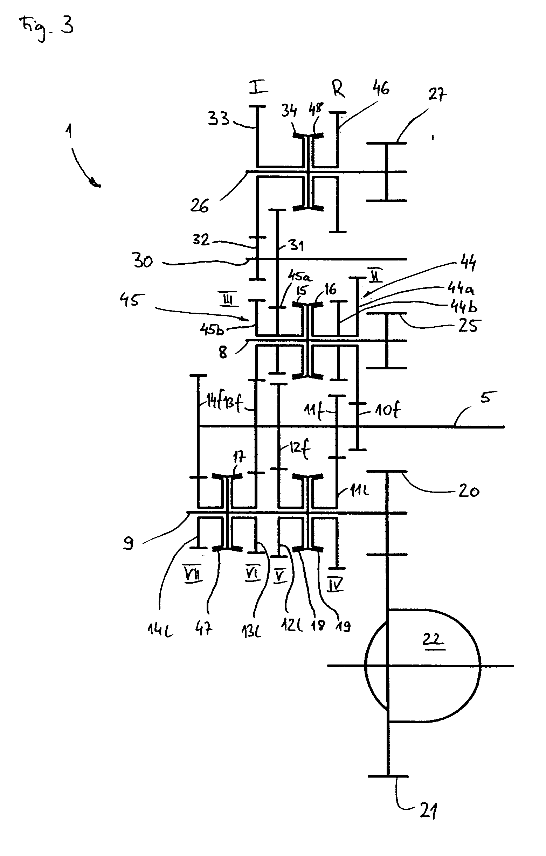

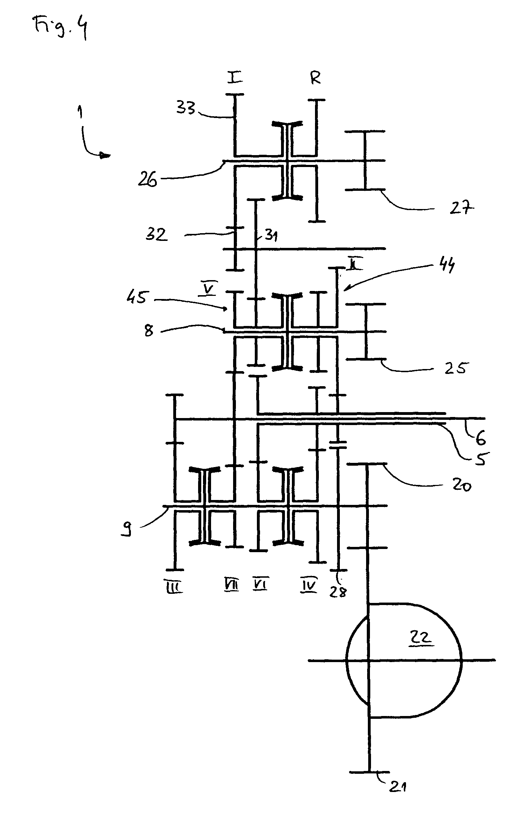

Die Figuren 3 und 4 zeigen weitere Ausführungsbeispiele des erfindungsgemäßen Schaltgetriebes. Identische, ähnliche oder vergleichbare Bauteile zu den Bauteilen des Ausführungsbeispiels der Figuren 1 und 2 werden dabei mit gleichen Bezugszeichen gekennzeichnet. Der Übersicht halber wird auf die Darstellung der Antriebseinheiten 35, 36 in den Figuren 3 und 4 abgesehen. Es sei an dieser Stelle jedoch darauf hingewiesen, dass die Schaltgetriebe gemäß der Figuren 3 und 4 auch ohne Antriebseinheiten eingesetzt werden können. In diesem Fall stellen diese Schaltgetriebe gewöhnliche Schaltgetriebe dar, also ohne die Möglichkeit eines Hybridmodus durch zusätzliche Antriebseinheiten.

Figur 3 zeigt ein Schaltgetriebe 1 mit sieben Vorwärtsgängen. Die Eingangswelle 5 trägt fünf Festräder 10f, 11f, 12f, 13f, 14f. Die erste Ausgangswelle 8 trägt zwei Doppel-Losräder 44, 45, während die zweite Ausgangswelle 9 die vier Lösräder 11l, 12l, 13l, 14l trägt. Zu beachten ist, dass das Festrad 13f sowohl mit dem Doppel-Losrad 45 als auch mit dem Losrad 13l gleichzeitig in Wirkverbindung steht. Somit dient das Zahnrad 13f als Festrad von zwei verschiedenen Zahnradpaaren, durch die die Eingangswelle durch das Zahnradpaar mit den Zahnrädern 13f, 45 mit der ersten Ausgangswelle 8 oder durch das Zahnradpaar mit den Zahnrädern 13f, 13l mit der zweiten Ausgangswelle 9 drehfest verbunden werden kann.

Die dritte Ausgangswelle 26 trägt das Losrad 33 und ein weiteres Losrad 46. Drehfest verbunden mit der dritten Ausgangswelle 26 ist das Ritzel 27, das mit dem Ringzahnrad 21 kämmt. Mit diesem Ringzahnrad 21 kämmen des weiteren die Ritzel 20 und 25, wodurch eine Drehmomentübertragung von der ersten und zweiten Ausgangswelle 8, 9 auf den Abtrieb ermöglicht wird.

Des weiteren zeigt Figur 3 die Zwischenwelle 30 mit dem Zahnrad 31 und dem Zahnrad 32. Das Zahnrad 32 weist einen kleineren Durchmesser als das Zahnrad 31 auf und kämmt mit dem Losrad 33 auf der dritten Ausgangswelle 26. Das Zahnrad 31 kämmt mit einem ersten Zahnradteil 45a des Doppel-Losrads 45. Ein zweites Zahnradteil 45b des Doppel-Losrads 45 kämmt mit dem Festrad 13f. Die Zahnradteile 45a, 45b weisen dabei unterschiedlich große Durchmesser auf.

Das Doppellosrad 44 besteht aus einem ersten Zahnradteil 44a und einem zweiten Zahnradteil 44b. Das Zahnradteil 44a kämmt mit dem Festrad 10f. Das zweite Zahnradteil 44b kämmt mit dem Zahnrad 46.

Durch die römischen Ziffern I bis VII werden die Vorwärtsgänge gekennzeichnet, die durch die einzelnen Zahnradpaare bzw. durch mehrere Zahnradpaare festgelegt werden. Das Schaltgetriebe 1 der Figur 3 weist im Gegensatz des Schaltgetriebes der Figuren 1 und 2 einen mechanischen Rückwärtsgang R auf. Durch die Gangschaltkupplungen 15, 16, 17, 18, 19, 34 sowie durch zwei weitere Gangschaltkupplungen 47, 48 lassen sich die einzelnen Gänge einlegen.

Beispielsweise ist der Rückwärtsgang R eingelegt, wenn die Gangschaltkupplung 48 geschlossen ist und damit das Losrad 46 drehfest mit der dritten Ausgangswelle 26 verbunden ist. Der Drehmomentfluss von der Eingangswelle 5 bis zum Ringzahnrad 21 führt über das Festrad 10f, über das Doppel-Losrad 44 mit den miteinander drehfest verbundenen Zahnradteilen 44a, 44b, über das Losrad 46, über die dritte Ausgangswelle 26 und über das Zahnrad 27.

Ist der Rückwärtsgang in Betrieb, sind alle übrigen Gangschaltkupplungen geöffnet. So auch die Gangschaltkupplung 16, so dass das Doppel-Losrad 44 kein Drehmoment auf die erste Ausgangswelle 8 überträgt und als Leerlauf-Zahnrad nur der Drehmomentübermittlung von der Eingangswelle 5 auf die dritte Ausgangswelle 26 dient.

Beim eingelegten ersten Vorwärtsgang I wird das Drehmoment der Eingangswelle 5 von dem Festrad 13f, von dem Doppellosrad 45 und von den Zahnrädern 31, 32 auf das Losrad 33 übertragen, das nun drehfest mit der dritten Ausgangskupplung 26 über die geschlossene Gangschaltkupplung 34 verbunden ist.

Figur 4 zeigt ein weiteres Ausführungsbeispiel der Erfindung: ein Doppelkupplungsgetriebe mit sieben Vorwärtsgängen I, II, ..., VII und einem Rückwärtsgang. Das hier nun dargestellte Schaltgetriebe weist im Vergleich zu dem Schaltgetriebe der Figur grundsätzlich den gleichen Aufbau auf, jedoch umfasst es zwei Eingangswellen 5, 6. Auch sind die Durchmesser der einzelnen Zahnräder anders gewählt, sodass sich andere Übersetzungsverhältnisse bilden und entsprechend andere Positionen für die einzelnen Vorwärtsgänge innerhalb des Getriebes ergeben.

Der ersten Eingangswelle 5 sind die Vorwärtsgänge II, IV und VI sowie der Rückwärtsgang R zugeordnet, während der zweiten Eingangswelle 6 die Vorwärtsgänge I, III, V und VII zugeordnet sind. Durch die Zuordnungen lässt sich ein Schalten zwischen zwei benachbarten Gängen unter Last in dem Doppelkupplungsgetriebe realisieren. Das Parkrad 28 ist auf der zweiten Ausgangswelle 9 angeordnet, kann aber alternativ beispielsweise, wie in Figur 1 dargestellt, auch auf der dritten Ausgangswelle 26 angeordnet werden.

Es sei darauf hingewiesen, dass die Schaltgetriebe der Figuren 3 und 4 auch mit den Antriebseinheiten 35, 36 des Schaltgetriebes der Figuren 1 und 2 ausgestattet werden können. Auch kann das Schaltgetriebe der Figuren 1 und 2 grundsätzlich auch mit einem mechanischen Rückwärtsgang versehen sein.

### Bezugszeichenliste

- 1: Schaltgetriebe (1)
- 2: 1. Kupplung
- 3: 2. Kupplung
- 4: Verbrennungsmotor
- 5: 1. Eingangswelle
- 6: 2. Eingangswelle
- 7: Achse
- 8: 1. Ausgangswelle
- 9: 2. Ausgangswelle
- 10: Zahnradpaar (10l Losrad, 10f Festrad)
- 11: Zahnradpaar (11l Losrad, 11f Festrad)
- 12: Zahnradpaar (121 Losrad, 12f Festrad)
- 13: Zahnradpaar (131 Losrad, 13f Festrad)
- 14: Zahnradpaar (141 Losrad, 14f Festrad)
- 15: Gangschaltkupplung
- 16: Gangschaltkupplung
- 17: Gangschaltkupplung
- 18: Gangschaltkupplung
- 19: Gangschaltkupplung
- 20: Zahnrad
- 21: Ringzahnrad
- 22: Differential
- 23: 1. Achse
- 24: 2. Achse
- 25: Zahnrad
- 26: 3. Ausgangswelle
- 27: Zahnrad
- 28: Parkrad
- 29: Getriebeeinheit
- 30: Zwischenwelle
- 31: Zahnrad
- 32: Zahnrad
- 33: Losrad
- 34: Gangschaltkupplung
- 35: 1. Antriebseinheit
- 36: 2. Antriebseinheit
- 37: Zahnrad
- 38: Kette
- 39: Drehachse
- 40: Winkel
- 41: Winkel
- 42: Winkel
- 43: Winkel
- 44: Doppel-Losrad (44a, 44b Zahnradteile)
- 45: Doppel-Losrad (44a, 44b Zahnradteile)
- 46: Losrad
- 47: Gangschaltkupplung
- 48: Gangschaltkupplung

## Patentansprüche

1. Schaltgetriebe (1) insbesondere für Kraftfahrzeuge,
- mit wenigstens einer Eingangswelle (5), die über eine Kupplung (2) mit einem Motor (4) verbindbar ist;
- mit wenigstens einer ersten Ausgangswelle (8) und einer zweiten Ausgangswelle (9), die jeweils mit einem Abtrieb in Eingriff stehen;
- mit mehreren Zahnradpaaren (10, 11, 12, 13, 14) zur Verbindung der wenigstens einen Eingangswelle (5) mit der ersten Ausgangswelle (8) beziehungsweise mit der zweiten Ausgangswelle (9), wobei ein Zahnradpaar (10, 11, 12, 13, 14) ein Festrad (10f, 11f, 12f, 13f, 14f) und ein Losrad (101, 111, 121, 131, 141) umfasst, das durch eine dem Losrad zugeordnete Gangschaltkupplung (15,16, 17, 18, 19) mit der Welle, die das Losrad (101, 111, 121, 131, 141) trägt, drehfest verbindbar ist und dadurch ein Vorwärtsgang einlegbar ist; und
- mit einer Getriebeeinheit (29), die mit einem Zahnrad (11I) einer der Zahnradpaare (11) in Eingriff steht, um die wenigstens eine Eingangswelle (5) mit einer mit dem Abtrieb in Eingriff stehenden dritten Ausgangswelle (26) zu verbinden,
**dadurch gekennzeichnet, dass**
die Getriebeeinheit (29) wenigstens ein Losrad (33) mit zugeordneter Gangschaltkupplung (34) umfasst, dass durch die Getriebeeinheit (29) ein weiterer Vorwärtsgang realisierbar ist und dass ein Hilfsantrieb vorgesehen ist.

2. Schaltgetriebe (1) nach Anspruch 1, **dadurch gekennzeichnet, dass** der Hilfsantrieb eine Drehung des Abtriebs in einer den Vorwärtsgängen entgegen gesetzter Richtung ermöglicht.

3. Schaltgetriebe (1) nach Anspruch 2, **dadurch gekennzeichnet, dass** der Hilfsantrieb mit der wenigstens einen Eingangswelle (5) in Wirkverbindung steht.

4. Schaltgetriebe (1) nach einem der Ansprüche 1 bis 3, **dadurch gekennzeichnet, dass** eine zweite Eingangswelle (6) vorgesehen ist, die koaxial zur der wenigstens einen Eingangswelle (5) angeordnet ist, wobei die zweite Eingangswelle (6) durch eine zweite Kupplung (3) mit dem Motor (4) verbindbar ist

5. Schaltgetriebe (1) nach einem der Ansprüche 1 bis 4, **dadurch gekennzeichnet, dass** der Hilfsantrieb zwei Antriebseinheiten (35, 36) umfasst, die jeweils mit einer Eingangswelle (5, 6) in Wirkverbindung stehen.

6. Schaltgetriebe (1) nach einem der Ansprüche 1 bis 5, **dadurch gekennzeichnet, dass** der Hilfsantrieb wenigstens eine Elektromaschine umfasst.

7. Schaltgetriebe (1) nach Anspruch 5 oder 6, **dadurch gekennzeichnet, dass** wenigstens eine Antriebseinheit (35) des Hilfsantriebs koaxial zu der wenigstens einen Eingangswelle (5) beziehungsweise zu den Eingangswellen (5, 6) angeordnet ist.

8. Schaltgetriebe (1) nach Anspruch 7, **dadurch gekennzeichnet, dass** die zur Eingangswelle (5) bzw. zu den Eingangswellen (5, 6) koaxial angeordnete Antriebseinheit (35) in radialer Richtung die erste Kupplung (2) und/oder die zweite Kupplung (3) umgreift.

9. Schaltgetriebe (1) nach einem der Ansprüche 5 bis 8, **dadurch gekennzeichnet, dass** eine Antriebseinheit (36) des Hilfsantriebs durch eine Kette (38) mit einer der Eingangswellen (5, 6) verbunden ist.

10. Schaltgetriebe (1) nach einem der Ansprüche 1 bis 9, **dadurch gekennzeichnet, dass** die Getriebeeinheit (29) ein erstes Zahnrad (31) umfasst, das mit einem Zahnrad (11I) des mit der Getriebeeinheit (29) in Eingriff stehenden Zahnradpaares (11) kämmt und um eine Achse rotiert, die von einer Achse der dritten Ausgangswelle (26) verschieden ist.

11. Schaltgetriebe (1) nach Anspruch 10, **dadurch gekennzeichnet, dass** die Getriebeeinheit (29) ein zweites Zahnrad (33) umfasst, das auf der dritten Ausgangswelle (26) abgeordnet ist und mit dem ersten Zahnrad (31) in Wirkverbindung steht.

12. Schaltgetriebe (1) nach Anspruch 10 oder 11, **dadurch gekennzeichnet, dass** die Getriebeeinheit (29) eine Zwischenwelle (30) mit einem dritten Zahnrad (32) umfasst.

13. Schaltgetriebe (1) nach einem der Ansprüche 10 bis 12, **dadurch gekennzeichnet, dass** das zweite Zahnrad (33) als Losrad (33) ausgebildet ist.

14. Schaltgetriebe (1) nach einem der Ansprüche 1 bis 13, **dadurch gekennzeichnet, dass** auf der wenigstens einen Eingangswelle (5) beziehungsweise auf den Eingangswellen (5, 6) jeweils die Festräder (10f, 11 f, 12f, 13f, 14f) der jeweiligen Zahnradpaare (10, 11, 12, 13, 14, 15) angeordnet sind.

15. Schaltgetriebe (1) nach einem der Ansprüche 1 bis 14, **dadurch gekennzeichnet, dass** ein Festrad (13f) eines ersten Zahnradpaares (13f, 45b) das Festrad eines zweiten Zahnradpaares (13f, 13l) bildet.

16. Schaltgetriebe (1) nach einem der Ansprüche 1 bis 15, **dadurch gekennzeichnet, dass** jede Ausgangswelle (8, 9, 26) drehfest jeweils ein Ritzel oder ein kleines Zahnrad (20, 25, 27) trägt, um Drehmoment auf den Abtrieb zu übertragen.

17. Schaltgetriebe (1) nach einem der Ansprüche 1 bis 16, **dadurch gekennzeichnet, dass** die erste und zweite Ausgangswelle (8, 9) in einer Ebene liegen, von der die wenigstens eine Eingangswelle (5) bzw. Eingangswellen (5, 6) beabstandet ist bzw. sind.

18. Schaltgetriebe (1) nach einem der Ansprüche 1 bis 17, **dadurch gekennzeichnet, dass** ein Getriebegehäuse zur Aufnahme der Wellen (5, 6, 8, 9, 26, 30) vorgesehen ist und dass ein Zahnrad (46) zum Übertragen von Drehmoment im Rückwärtsgang auf der dritten Ausgangswelle (26) angeordnet ist, wobei das Zahnrad (46) als Losrad ausgebildet ist.

19. Schaltgetriebe (1) nach Anspruch 18, **dadurch gekennzeichnet, dass** das Zahnrad für den Rückwärtsgang R mit einem Doppel-Losrad (44) in Eingriff steht, das ein erstes Zahnradteil (44a) und ein zweites Zahnradteil (44b) umfasst, wobei das erste Zahnradteil (44a) als Losrad eines Zahnradpaares (10) für einen Vorwärtsgang, vorzugsweise für den zweiten Vorwärtsgang (II), eingesetzt wird und das zweite Zahnradteil (44b) mit dem Zahnrad für den Rückwärtsgang R kämmt, und wobei ein Durchmesser des ersten Zahnradteils (44a) größer als ein Durchmesser des zweiten Zahnradteils (44b) ist.

20. Schaltgetriebe (1) nach einem der Ansprüche 1 bis19, **dadurch gekennzeichnet, dass** es sieben Vorwärtsgänge aufweist.

## Claims

1. Change-speed gearbox (1), in particular for motor vehicles,
- having at least one input shaft (5) which can be connected to an engine (4) by means of a clutch (2);
- having at least one first output shaft (8) and one second output shaft (9) which each engage with a drive output;
- having several gear wheel pairs (10, 11, 12, 13, 14) for connecting the at least one input shaft (5) to the first output shaft (8) or to the second output shaft (9), a gear wheel pair (10, 11, 12, 14, 14) comprising one fixed wheel (10f, 11f, 12f, 13f, 14f) and one loose wheel (101, 111, 121, 131, 141) which can be connected, by means of a gear shift clutch (15, 16, 17, 18, 19) assigned to the loose wheel, in a rotationally fixed manner to the shaft which bears the loose wheel (101, 111, 121, 131, 141), and as a result, a forward gear can be selected; and
- having a gearbox unit (29) which engages with a gear wheel (111) of one of the gear wheel pairs (11) in order to connect the at least one input shaft (5) to a third output shaft (26) which engages with the drive output,
**characterized in that**
the gearbox unit (29) comprises at least one loose wheel (33) with an assigned gear shift clutch (34), **in that** a further forward gear can be implemented by means of the gearbox unit (29) and **in that** an auxiliary drive is provided.

2. Change-speed gearbox (1) according to Claim 1, **characterized in that** the auxiliary drive allows the drive output to rotate in a direction counter to the forward gears.

3. Change-speed gearbox (1) according to Claim 2, **characterized in that** the auxiliary drive is operatively connected to the at least one input shaft (5).

4. Change-speed gearbox (1) according to one of Claims 1 to 3, **characterized in that** a second input shaft (6) is provided which is arranged coaxially with respect to the at least one input shaft (5), it being possible for the second input shaft (6) to be connected to the engine (4) by means of a second clutch (3).

5. Change-speed gearbox (1) according to one of Claims 1 to 4, **characterized in that** the auxiliary drive comprises two drive units (35, 36) which are each operatively connected to a respective input shaft (5, 6).

6. Change-speed gearbox (1) according to one of Claims 1 to 5, **characterized in that** the auxiliary drive comprises at least one electric machine.

7. Change-speed gearbox (1) according to Claim 5 or 6, **characterized in that** at least one drive unit (35) of the auxiliary drive is arranged coaxially with respect to the at least one input shaft (5) or to the input shafts (5, 6).

8. Change-speed gearbox (1) according to Claim 7, **characterized in that** the drive unit (35) which is arranged coaxially with respect to the input shaft (5) or to the input shafts (5, 6) engages around the first clutch (2) and/or the second clutch (3) in the radial direction.

9. Change-speed gearbox (1) according to one of Claims 5 to 8, **characterized in that** one drive unit (36) of the auxiliary drive is connected to one of the input shafts (5, 6) by means of a chain (38).

10. Change-speed gearbox (1) according to one of Claims 1 to 9, **characterized in that** the gearbox unit (29) comprises a first gear wheel (31) which meshes with a gear wheel (111) of the gear wheel pair (11) which engages with the gearbox unit (29), said first gear wheel (31) rotating about an axis which is different than an axis of the third output shaft (26).

11. Change-speed gearbox (1) according to Claim 10, **characterized in that** the gearbox unit (29) comprises a second gear wheel (33) which is arranged on the third output shaft (26) and is operatively connected to the first gear wheel (31).

12. Change-speed gearbox (1) according to Claim 10 or 11, **characterized in that** the gearbox unit (29) comprises an intermediate shaft (30) having a third gear wheel (32).

13. Change-speed gearbox (1) according to one of Claims 10 to 12, **characterized in that** the second gear wheel (33) is embodied as a loose wheel (33).

14. Change-speed gearbox (1) according to one of Claims 1 to 13, **characterized in that** each of the fixed wheels (10f, 11f, 12f, 13f, 14f) of the respective gear wheel pairs (10, 11, 12, 13, 14) are arranged on the at least one input shaft (5) or on the input shafts (5, 6).

15. Change-speed gearbox (1) according to one of Claims 1 to 14, **characterized in that** a fixed wheel (13f) of a first gear wheel pair (13f, 45b) forms the fixed wheel of a second gear wheel pair (13f, 131).

16. Change-speed gearbox (1) according to one of Claims 1 to 15, **characterized in that** in order to transmit torque to the drive output, each output shaft (8, 9, 26) bears a respective pinion or small gear wheel (20, 25, 27) in a rotationally fixed manner.

17. Change-speed gearbox (1) according to one of Claims 1 to 16, **characterized in that** the first and second output shafts (8, 9) lie in one plane, which the at least one input shaft (5) or the input shafts (5, 6) is or are at a distance from.

18. Change-speed gearbox (1) according to one of Claims 1 to 17, **characterized in that** a gearbox housing is provided for holding the shafts (5, 6, 8, 9, 26, 30) and **in that** one gear wheel (46) is arranged to transmit torque to the third output shaft (26) in the reverse gear, the gear wheel (46) being embodied as a loose wheel.

19. Change-speed gearbox (1) according to Claim 18, **characterized in that** the gear wheel for the reverse gear R engages with a double loose wheel (44) which comprises a first gear wheel part (44a) and a second gear wheel part (44b), the first gear wheel part (44a) being used as a loose wheel of a gear wheel pair (10) for a forward gear, preferably for the second forward gear (II), and the second gear wheel part (44b) meshing with the gear wheel for the reverse gear R, and a diameter of the first gear wheel part (44a) being larger than a diameter of the second gear wheel part (44b).

20. Change-speed gearbox (1) according to one of Claims 1 to 19, **characterized in that** it has seven forward gears.

## Revendications

1. Boîte de vitesses (1), notamment pour véhicules automobiles,
- comprenant au moins un arbre d'entrée (5) qui peut être relié à un moteur (4) par le biais d'un accouplement (2) ;
- comprenant au moins un premier arbre de sortie (8) et un deuxième arbre de sortie (9) qui sont respectivement en prise avec une sortie ;
- comprenant plusieurs paires de roues dentées (10, 11, 12, 13, 14) pour relier l'au moins un arbre d'entrée (5) avec le premier arbre de sortie (8) ou avec le deuxième arbre de sortie (9), une paire de roues dentées (10, 11, 12, 13, 14) comprenant une roue fixe (10f, 11f, 12f, 13f, 14f) et une roue libre (101, 111, 121, 131, 141) qui peut être reliée sans rotation avec l'arbre qui supporte la roue libre (101, 111, 121, 131, 141) par le biais d'un accouplement de changement de rapport (15, 16, 17, 18, 19) associé à la roue libre et permet ainsi d'engager une marche avant ; et
- comprenant une unité d'engrenage (29) qui est en prise avec une roue dentée (111) de l'une des paires de roues dentées (11) afin de relier l'au moins un arbre d'entrée (5) avec un troisième arbre de sortie (26) en prise avec la sortie,
**caractérisée en ce que**
l'unité d'engrenage (29) comprend au moins une roue libre (33) à laquelle est associé un accouplement de changement de rapport (34), que l'unité d'engrenage (29) permet de réaliser une marche avant supplémentaire et qu'il est prévu un mécanisme d'entraînement auxiliaire.

2. Boîte de vitesses (1) selon la revendication 1, **caractérisée en ce que** le mécanisme d'entraînement auxiliaire permet une rotation de la sortie dans un sens opposé à celui des marches avant.

3. Boîte de vitesses (1) selon la revendication 2, **caractérisée en ce que** le mécanisme d'entraînement auxiliaire est en liaison active avec l'au moins un arbre d'entrée (5).

4. Boîte de vitesses (1) selon l'une des revendications 1 à 3, **caractérisée en ce qu'**il est prévu un deuxième arbre d'entrée (6) qui est disposé de manière coaxiale par rapport à l'au moins un arbre d'entrée (5), le deuxième arbre d'entrée (6) pouvant être relié avec le moteur (4) par le biais d'un deuxième accouplement (3).

5. Boîte de vitesses (1) selon l'une des revendications 1 à 4, **caractérisée en ce que** le mécanisme d'entraînement auxiliaire comprend deux unités d'entraînement (35, 36) qui sont respectivement en liaison active avec un arbre d'entrée (5, 6).

6. Boîte de vitesses (1) selon l'une des revendications 1 à 5, **caractérisée en ce que** le mécanisme d'entraînement auxiliaire comprend au moins une machine électrique.

7. Boîte de vitesses (1) selon la revendication 5 ou 6, **caractérisée en ce qu'**au moins une unité d'entraînement (35) du mécanisme d'entraînement auxiliaire est disposée de manière coaxiale par rapport à l'au moins un arbre d'entrée (5) ou par rapport aux arbres d'entrée (5, 6).

8. Boîte de vitesses (1) selon la revendication 7, **caractérisée en ce que** l'unité d'entraînement (35) disposée de manière coaxiale par rapport à l'arbre d'entrée (5) ou par rapport aux arbres d'entrée (5, 6) enveloppe le premier accouplement (2) et/ou le deuxième accouplement (3) dans le sens radial.

9. Boîte de vitesses (1) selon l'une des revendications 5 à 8, **caractérisée en ce qu'**une unité d'entraînement (36) du mécanisme d'entraînement auxiliaire est reliée avec l'un des arbres d'entrée (5, 6) par une chaîne (38).

10. Boîte de vitesses (1) selon l'une des revendications 1 à 9, **caractérisée en ce que** l'unité d'engrenage (29) comprend une première roue dentée (31) qui s'engrène avec une roue dentée (111) de la paire de roues dentées (11) qui est en prise avec l'unité d'engrenage (29) et tourne autour d'un axe qui est différent d'un axe du troisième arbre de sortie (26).

11. Boîte de vitesses (1) selon la revendication 10, **caractérisée en ce que** l'unité d'engrenage (29) comprend une deuxième roue dentée (33) qui est disposée sur le troisième arbre de sortie (26) et qui est en liaison active avec la première roue dentée (31).

12. Boîte de vitesses (1) selon la revendication 10 ou 11, **caractérisée en ce que** l'unité d'engrenage (29) comprend un arbre intermédiaire (30) muni d'une troisième roue dentée (32).

13. Boîte de vitesses (1) selon l'une des revendications 10 à 12, **caractérisée en ce que** la deuxième roue dentée (33) est réalisée sous la forme d'une roue libre (33).

14. Boîte de vitesses (1) selon l'une des revendications 1 à 13, **caractérisée en ce que** les roues fixes (10f, 11f, 12f, 13f, 14f) des paires de roues dentées (10, 11, 12, 13, 14, 15) respectives sont à chaque fois disposées sur l'au moins un arbre d'entrée (5) ou sur les arbres d'entrée (5, 6).

15. Boîte de vitesses (1) selon l'une des revendications 1 à 14, **caractérisée en ce qu'**une roue fixe (13f) d'une première paire de roues dentées (13f, 45b) forme la roue fixe d'une deuxième paire de roues dentées (13f, 131).

16. Boîte de vitesses (1) selon l'une des revendications 1 à 15, **caractérisée en ce que** chaque arbre de sortie (8, 9, 26) porte à chaque fois un pignon ou une petite roue dentée (20, 25, 27) non rotatif pour transmettre un couple à la sortie.

17. Boîte de vitesses (1) selon l'une des revendications 1 à 16, **caractérisée en ce que** le premier et le deuxième arbres de sortie (8, 9) se trouvent dans un plan duquel l'au moins un arbre d'entrée (5) ou les arbres d'entrée (5, 6) sont espacés.

18. Boîte de vitesses (1) selon l'une des revendications 1 à 17, **caractérisée en ce qu'**il est prévu un carter d'engrenage pour recevoir les arbres (5, 6, 8, 9, 26, 30) et qu'une roue dentée (46) destinée à transmettre le couple en marche arrière est disposée sur le troisième arbre de sortie (26), la roue dentée (46) étant réalisée sous la forme d'une roue libre.

19. Boîte de vitesses (1) selon la revendication 18, **caractérisée en ce que** la roue dentée pour la marche arrière R est en prise avec une double roue libre (44) qui comprend une première partie de roue dentée (44a) et une deuxième partie de roue dentée (44b), la première partie de roue dentée (44a) étant utilisée en tant que roue libre d'une paire de roues dentées (10) pour une marche avant, de préférence pour le deuxième rapport de marche avant (II) et la deuxième partie de roue dentée (44b) s'engrenant avec la roue dentée pour la marche arrière R et un diamètre de la première partie de roue dentée (44a) étant supérieur à un diamètre de la deuxième partie de roue dentée (44b).

20. Boîte de vitesses (1) selon l'une des revendications 1 à 19, **caractérisée en ce qu'**elle présente sept marches avant.
